# EUROPÄISCHE PATENTSCHRIFT

(11) **EP 2 340 716 B1**
(45) Veröffentlichungstag und Bekanntmachung des Hinweises auf die Patenterteilung: **13.11.2013**
(21) Anmeldenummer: 09181004.4
(22) Anmeldetag: 30.12.2009
(51) Int. Cl.: A23B 4/052

(54) **Raucherzeuger**
Smoke generator
Générateur de fumée

(43) Veröffentlichungstag der Anmeldung: 06.07.2011
(73) Patentinhaber: Created-Pool, 74226 Nordheim (DE)
(72) Erfinder: Norbert, Christoph, 74226 Nordheim, (DE)
(74) Vertreter: Schmitt, Martin

(56) Entgegenhaltungen:
- EP-A2- 0 015 521
- DE-A1- 3 204 723
- DE-A1- 3 319 143
- DE-A1- 19 518 496
- GB-A- 912 162

## Beschreibung

Die vorliegende Erfindung betrifft einen Rauchererzeuger mit einem Reibrad zur Erzeugung von Rauch mittels Friktion und mit Mitteln zur Erzeugung von Wasserdampf.

Derartige Rauchererzeuger sind beispielsweise durch die GB 912,162 oder die EP 0015521 A2 bekannt geworden.

Bei der Raucherzeugung kommt es zur Anwendung der Pyrolyse, d.h. der trockenen Destillation. Bei der Pyrolyse des Holzes entstehen in verschiedenen Temperaturbereichen unter anderem Methylalkohole beziehungsweise Methangase. Diese Verbindungen sind hochexplosiv und können sich chemisch auch in andere Verbindungen wie zum Beispiel Formaldehyd umwandeln. Formaldehyd gilt als gesundheitsgefährdend, weil Krebs erregend. Es können über 400 verschiedene chemische Verbindungen entstehen, die zum Teil unerforscht beziehungsweise unbekannt sind. Zur Farb- und Geschmacksgebung des geräucherten Produkts tragen allerdings nur wenige der Verbindungen bei.

Beim Reibrauch- oder Friktionsrauchverfahren wird ein Profilholz auf ein Reibrad mit entsprechend ausgebildeter Struktur mithilfe einer mechanischen Vorrichtung gedrückt. Für den Antrieb werden einfache Elektromotoren ohne Getriebe beziehungsweise Unter- oder Übersetzung verwendet. Die Drehzahl der Motoren liegt bei circa 3000 U/min. Zu Beginn der Pyrolyse wird das Profilholz auf das mit voller Drehzahl laufende Reibrad gedrückt. Durch diesen Vorgang wird Reibungswärme erzeugt, die dann die Pyrolyse unkontrolliert auslöst. Der Elektromotor wird bis an eine Belastungsgrenze belastet. Mithilfe der mechanischen Druckvorrichtung wird der Elektromotor entlastet, so dass der Elektromotor seine Drehzahl neu aufbauen kann. Nach einer Abkühlung wird der Elektromotor erneut bis an die Grenze belastet. Es ist zu vermuten, dass die vorgenannten gesundheitsschädlichen Verbindungen entstehen können. Darüber hinaus ist der Betrieb dieser Rauchererzeuger gefährlich, wenn Sauerstoff zugeführt wird, weil Explosionsgefahr besteht. Es ist auch bekannt, Kondensat- oder Dampfraucherzeuger zu verwenden. Der erzeugte Rauch ist circa 85 °C heiß und kondensiert auf der getrockneten wesentlich kälteren Ware. Der Nachteil dieses Verfahrens besteht darin, dass aufwändige Reinigungsarbeiten notwendig sind und kurze Bearbeitungszyklen auftreten.

Der vorliegenden Erfindung ist die Aufgabe zu Grunde, einen Rauchererzeuger mit Mitteln zur Erzeugung von Rauch mithilfe von Friktion derart weiterzuentwickeln, dass die Pyrolyse möglichst kontrolliert und inert abläuft.

Diese Aufgabe wird durch einen Rauchererzeuger gemäß Patentanspruch 1 gelöst. Der Wasserdampf kann zur Beeinflussung der Temperatur im Bereich der Erzeugung der Reibungswärme, das heißt des Friktionsrades, eingesetzt werden. Dieser Vorgang kann dadurch gezielt erreicht werden, indem das Friktionsrad Austrittsöffnungen für den Wasserdampf aufweist. Das Friktionsrad kann vorgewärmt oder abgekühlt werden. Die Pyrolyse kann dadurch beeinflusst werden.

Durch eine Dampfdrucküberwachung wird sichergestellt, dass die Pyrolyse noch inerter abläuft.

In technischer Ausgestaltung der Zuführung für den Wasserdampf kann die Zuführung in die Lagerung des Friktionsrades integriert sein.

Ein bevorzugtes Ausführungsbeispiel der Erfindung ist in der schematischen Zeichnung dargestellt und wird anhand der Figuren nachfolgend beschrieben. Es zeigt:
- Figur 1: eine Frontansicht eines Raucherzeugers;
- Figur 2: eine Seitenansicht des Raucherzeugers aus Figur 1 gemäß Pfeilrichtung II;
- Figur 3: eine weitere Seitenansicht des Raucherzeugers aus Figur 1 gemäß Pfeilrichtung III;
- Figur 4: einen Längsschnitt des Raucherzeugers aus Figur 1.

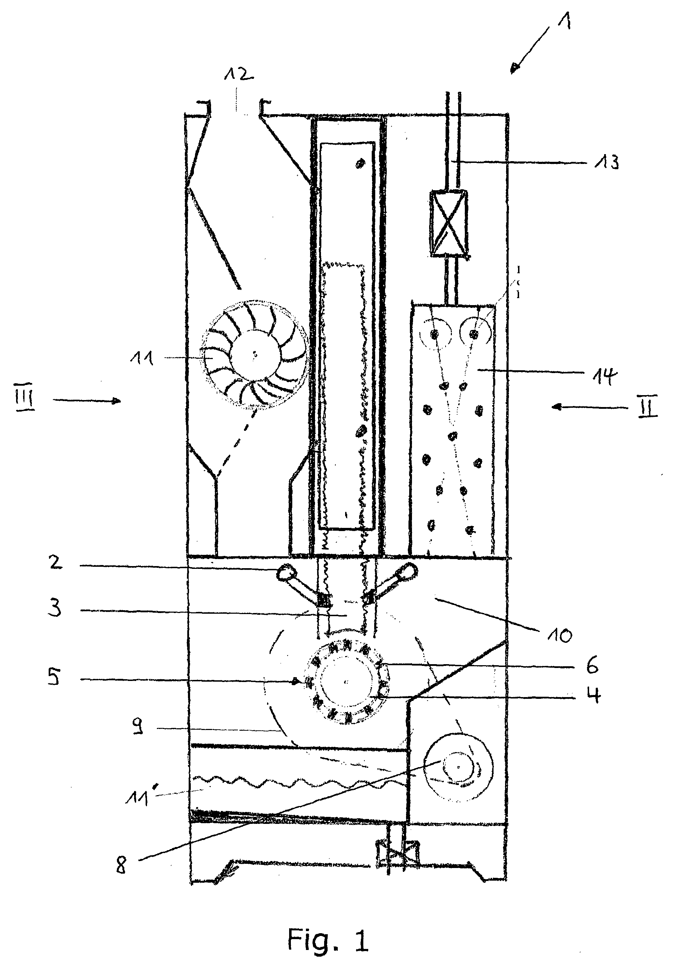

Aus der Figur 1 ist ersichtlich, dass ein Raucherzeuger 1 Mittel zur Erzeugung von Rauch mithilfe von Friktion und Mittel zur Erzeugung von überhitztem Wasserdampf umfasst. Es kann Kondensatreibrauch oder Friktionsdampfrauch erzeugt werden.

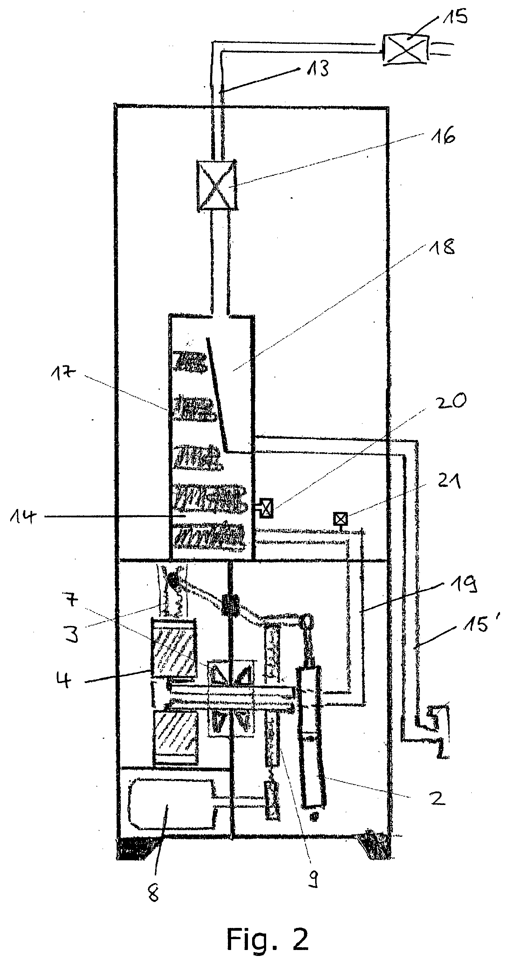

Mithilfe einer mechanischen Druckvorrichtung 2 wird ein Holzstab 3 auf ein Friktionsrad 4 aus Edelstahl aufgepresst. Der Holzstab 3 kann durch ein Profilholz beispielsweise aus Buche ausgebildet sein. Das Friktionsrad 4 besitzt auf den Friktionsflächen 5 Bohrungen, die Austrittsöffnungen 6 für überhitzten Wasserdampf ausbilden. Es kann daher kontinuierlich Wasserdampf aus dem Friktionsrad 4 in Richtung des Holzstabes 3 austreten. Das Friktionsrad 4 ist abgedichtet und wird über die Vorlegewelle 7 (siehe Figur 2) mit Wasserdampf versorgt, der dem Raucherzeuger 1 über eine Zuleitung 13 mit ca. 1,5 bar zugeführt wird und in einem Dampfüberhitzer 14 überhitzt wird.

Das Friktionsrad 4 kann außerdem mithilfe des Wasserdampfs vor Beginn der Raucherzeugung erwärmt werden. Nach Ende der Raucherzeugung können die Austrittsöffnungen 6 mithilfe des Wasserdampfs gereinigt werden.

Durch die Vorwärmung des Friktionsrades 4 erreicht man einerseits bei Beginn der Raucherzeugung schneller den Temperaturbereich, der für die Pyrolyse günstig ist. Andererseits kann der Wasserdampf anschließend das Friktionsrad 4 auf dem gewünschten Temperaturbereich halten und einen weiteren unerwünschten Temperaturanstieg verhindern. Mithilfe des Wasserdampfs kann auf die Steuerung der Temperatur des Friktionsrades 4 Einfluss genommen werden.

Eine Untersetzung 9 des Antriebsmotors 8 ermöglicht in diesem Temperaturbereich einen kontinuierlichen Anpressdruck und somit gleich bleibende Produktionsparameter.

Durch eine Dampfdrucküberwachung wird sichergestellt, dass die Pyrolyse inert abläuft und somit ein inertes Verhältnis gesichert ist.

Der Rauch wird in einer Rauchkammer 10 erzeugt, mithilfe eines Gebläses 11 weitergeleitet und kann über die Rauchaustrittsöffnung 12 austreten.

Die Rauchvernichtung nach Ende der Raucherzeugung erfolgt über einen Dreikammer-Rauchwäscher, der kostengünstig über ein Umlaufbecken 11 betrieben wird. Die dabei entstehenden Abwässer werden wie Kammerabwässer behandelt. Die Abluft ist rußfrei.

In Figur 2 ist die Dampfüberhitzung dargestellt. Wasserdampf wird über die Zuleitung 13 dem Dampfüberhitzer 14 zugeführt (Druckminderer 15, Dampfventil 16). Zur Dampfüberhitzung werden Heizspiralen 17 eingesetzt. Das Kondensat wird aus einem Dampftrocknungsraum 18 des Dampfüberhitzers 14 über eine Kondensatleitung 15 abgeführt. Der überhitzte Wasserdampf gelangt über eine Dampfleitung 19 kontrolliert (Druckwächter 20, Dampfventil 21) über die Lagerung (Vorlegewelle 7) des Friktionsrades 4 zur Friktionsfläche. Druckvorrichtung 2 und Untersetzung 9 unterstützen die Raucherzeugung.

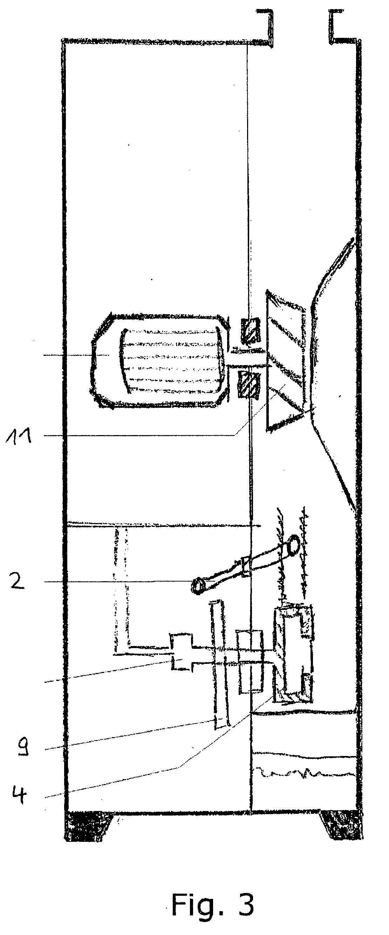

Figur 3 zeigt das Gebläse und die Druckvorrichtung 2.

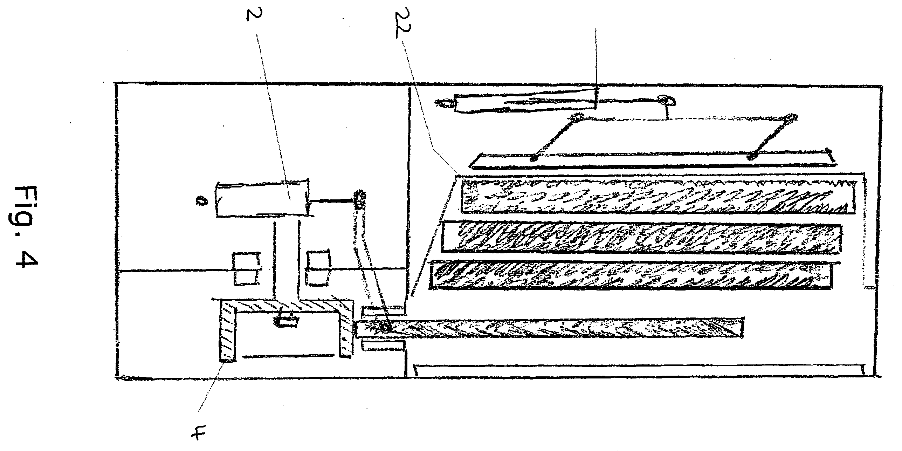

Gemäß Figur 4 weist der Raucherzeuger 1 ein Holzvorratsmagazin mit einem Holzreservoir 22 auf.

## Patentansprüche

1. Raucherzeuger mit einem Reibrad zur Erzeugung von Rauch mithilfe von Friktion und mit Mitteln zur Erzeugung von Wasserdampf vorgesehen sind, **dadurch gekennzeichnet, dass** das Reibrad Austrittsöffnungen für den zugeführten Wasserdampf aufweist.

2. Raucherzeuger nach Anspruch 1, **dadurch gekennzeichnet, dass** die Zuführung für den Wasserdampf zum Reibrad in die Lagerung des Reiberades integriert ist. -

3. Raucherzeuger nach Anspruch 1 oder 2, **dadurch kennzeichnet, dass** eine Dampfdrucküberwachung vorgesehen ist.

## Claims

1. Smoke generator comprising a friction wheel for generating smoke by means of friction, and means for generating water vapour, **characterized in that** the friction wheel has outlet openings for the supplied water vapour.

2. Smoke generator according to claim 1, **characterized in that** the supply for the water vapour to the friction wheel is integrated in the bearing of the friction wheel.

3. Smoke generator according to claim 1 or 2, **characterized in that** a vapour pressure monitoring means is provided.

## Revendications

1. Générateur de fumée ayant une roue de friction pour produire de la fumée à l'aide de la friction, et ayant des moyens pour produire de la vapeur d'eau, **caractérisé en ce que** la roue de friction comporte des orifices de sortie pour la vapeur d'eau alimentée.

2. Générateur de fumée selon la revendication 1, **caractérisé en ce que** l'alimentation pour la vapeur d'eau vers la roue de friction est intégrée dans le coussinet de la roue de friction.

3. Générateur de fumée selon la revendication 1 ou 2, **caractérisé en ce qu'**il est prévu un surveille de pression de vapeur.
